# EUROPEAN PATENT SPECIFICATION

(11) **EP 0 994 123 B1**
(45) Date of publication and mention of the grant of the patent: **30.06.2004**
(21) Application number: 99402516.1
(22) Date of filing: 13.10.1999
(51) Int. Cl.: C08F 2/06, C08F 220/04, C08F 220/64, C09D 133/02, C09D 11/10, C08F 289/00

(54) **Rosin-fatty acid vinylic polymer compositions**
Kolophonium-Fettsäure Vinyl Polymer Zusammensetzungen
Compositions colophane-acide gras polymère vinylique

(30) Priority: 14.10.1998 US 172560; 14.10.1998 US 172567; 14.10.1998 US 172557; 14.10.1998 US 174398
(43) Date of publication of application: 19.04.2000
(73) Proprietor: WESTVACO CORPORATION, New York New York 10171 (US)
(72) Inventor: Shah, Rajnikant, Mt. Pleasant, SC 29466 (US); Adams, Stanley C., Mt. Pleasant, SC 29466 (US)
(74) Representative: Portal, Gérard

(56) References cited:
- EP-A- 0 341 956
- GB-A- 1 048 060

## Description

### 1. Field of the Invention

This invention relates to novel rosin-fatty acid vinylic polymer compositions and the process for preparing them. In particular, the invention relates to novel rosin-fatty acid vinylic polymer compositions which exhibit properties that make them useful as support resins and grind vehicles for ink formulations, as surface sizing compositions for paper and other cellulosic materials, and as moisture vapor barrier coatings for paper and other cellulosic materials.

### BACKGROUND OF THE INVENTION

Polymeric resins of different types have been proven useful in a variety of different. For example, polymeric resins may be employed as support resins for ink formulations. It is highly desirable that ink and overprint formulations utilized for graphic art applications possess certain high performance characteristics. As typical surfactant-based emulsion polymerization products do not have the desired rheology properties for these applications, it is common practice to add a polymeric resin as a support resin in place of, or in addition to, the surfactants. These water and alkaline soluble (at pHs of about 8) resins are added to the emulsion polymerization reaction to improve the stability and rheological properties of the latex. Improved stability results from adsorption of the resin on the surface of the particles and the increased viscosity of the emulsion.

Polymeric resins may also be employed in water-based ink formulations as grind vehicles. Driven by environmental concerns and increasing regulations on the volatile organic content of coatings, the applications of water-based inks are increasing in the ink industry. A typical water-based ink system is formulated by the addition of a binder resin to a grind base. Grind bases are prepared by using grinding resins to disperse pigments. Typically, such polymeric grind resins are cut into aqueous ammonia at a pH of about 8.5 and the resulting solutions are employed to grind the pigments. Pigments are crystalline solids composed of agglomerates, aggregates, and primary particles which vary in size from 0.02 to 0.50 microns. During the grinding process, agglomerates and aggregates are broken down into primary particles which possess strong tendencies to reassociate in an ink. The finer the particle size of the pigment, the greater the color strength, but the more difficult the pigment becomes to disperse. Grinding resins help prevent the particles from reassociating by increasing both the electrostatic and steric repulsion between pigment particles.

Polymeric resins may also be employed as sizing compositions for cellulosic materials. Sizing is a term used in the papermaking art to describe processes which reduce the water absorbency of cellulosic materials such as sheets of paper. This is commonly accomplished by precipitating a nearly fully saponified rosin soap or a free rosin dispersion on the cellulosic fibers with alum to form aluminum resinate. The aluminum resinate coats the exposed surface to give it a hydrophobic character, thereby rendering the surface resistant to wicking by water, inks, and other polar liquids.

Rosin sizes are normally water soluble alkali soaps or colloidally stabilized dispersions of rosin. A variety of polymeric rosin resin sizes have been developed to address specific coating needs. However, certain rosins are highly prone to crystallization. Crystal formation in such rosins tend to occur during the production of the rosin size, during size storage, or after the size has been diluted to a low solids level.

Polymeric resins may also be employed as moisture vapor barrier coatings for paper and other cellulosic base materials. Many packaged materials, such as detergents and potato chips, must maintain a substantially constant moisture content in order to prevent the development of undesirable characteristics (such as agglomeration of the detergent particles or a lack of brittleness of potato chips). When the material in which these types of products were packaged did not function as an effective moisture barrier, the shelf life of the product was shortened due to the moisture gain or loss by the product.

Currently, the moisture vapor barrier coatings most commonly employed by the packaging industry are polyvinylidene chloride (PVDC) and polyethylene. However, problems exist with both of these coatings. For example, the use of PVDC in certain coating applications requires the utilization of environmentally unfriendly solvents. Moreover, where solvents are not be used and an aqueous dispersion of PVDC is employed, the corrosive nature of the dispersion often damages the coating equipment. As for polyethylene, this material must be applied on the desired substrate via a relatively expensive extrusion process.

Often these coating are employed in two-step systems where a primer is used to seal the pores of the packing material and a top coat is utilized to provide additional moisture resistance. However, the additional coating step required in these two-part systems adds to the expense of the process.

To address these problems, the packing industry is actively seeking an effective water-based moisture barrier coating that can be applied in one step.

The traditional methods for producing polymeric resins is well known. Commonly a solution polymerization reaction is employed wherein styrenic monomer and acrylic acid is mixed with a hydrocarbon solvent, a polymerization initiator, and a chain transfer agent. Upon completion of the reaction, the solution is stripped of the solvent to yield the polymeric resin.

However, major problems exist with the traditional methods of producing these polymeric resins. For example, these methods require the use of environmentally adverse hydrocarbon solvents. Moreover, as these solvents are not usable or desirable in water-based ink or overprint formulations, the solvents must be stripped from the resulting acrylic polymers (thereby causing a yield loss). This stripping step also adds expense to the process due to both the loss of yield and the energy consumed in performing the stripping. Also, these methods must utilize chain transfer agents to regulate the molecular weight of the resulting polymeric resin.

Therefore, an object of this invention is to solve these major problems by disclosing a method of producing rosin-fatty acid vinylic polymer compositions.

Another object of this invention is to disclose rosin-fatty acid vinylic polymer compositions which exhibit properties that make them useful as support resins in water-based ink, overprint, and other coating formulations.

A further object of this invention is to disclose rosin-fatty acid vinylic polymer compositions which exhibit properties that make them useful for formulating grind vehicles for inks and other coatings.

Another object of this invention is to disclose rosin-fatty acid vinylic polymer compositions which exhibit properties that make them useful for formulating surface sizing compositions for paper and other cellulosic materials.

A further object of this invention is to disclose rosin-fatty acid vinylic polymer compositions which exhibit properties that make them useful for formulating moisture vapor barrier coatings for paper and other cellulosic materials.

### SUMMARY OF THE INVENTION

The objects of this invention are met via a method that employs rosin and fatty acid to act as solvents in the polymerization reaction of the acrylic monomers, thereby producing rosin-fatty acid vinylic polymer compositions which are useful as: 1) support resins in water-based ink, overprint, and other coating applications, 2) grind resins in inks and other coating applications, 3) as surface sizing compositions for cellulosic materials, and 4) as moisture vapor barrier coatings for paper and other cellulosic base materials. As this method does not require the use of hydrocarbon solvents, the need for solvent stripping is eliminated. Also, the polymerization reaction can be conducted at higher temperatures (i.e., up to boiling point of fatty acid) than traditional solution polymer methods, thereby allowing the practitioner to utilize smaller amounts of free radical initiators. Furthermore, the practitioner is able to regulate molecular weight without the use of chain transfer agents, thereby both reducing costs and avoiding the production of unpleasant odors associated with such agents. Additionally, the fatty acid and rosin can function as a reactive diluent to impart flexibility to the support resin.

### DESCRIPTION OF THE PREFERRED EMBODIMENT

The method for producing rosin-fatty acid vinylic polymer compositions comprises reacting in an addition polymerization reaction:
(A) about 20.0% to about 60.0% by total weight of the reactants of a fatty acid rosin mixture comprising:
   (1) about 10.0% to about 90.0% by total weight of the fatty acid rosin mixture of fatty acid, and
   (2) about 10.0% to about 90.0% by total weight of the fatty acid rosin mixture of rosin; and
(B) about 40.0% to about 80.0% by total weight of the reactants of a monomer mixture comprising:
   (1) about 15.0% to about 45.0% by total weight of the monomer mixture of a member selected from the group consisting of acrylic acid, methacrylic acid, and combinations thereof;
   (2) about 55.0% to about 85.0% by total weight of the monomer mixture of a member selected from the group consisting of vinylic monomers and combinations thereof;
   (3) about 0.5% to about 5.0% by total weight of the monomer mixture of a polymerization initiator;
   (4) up to about 4.0% by total weight of the monomer mixture of a chain transfer agent; and
   (5) up to about 28% by total weight of the monomer mixture of a hydrocarbon solvent;
for a period of time sufficient to produce the rosin-fatty acid vinylic polymer compositions.

The rosin and fatty acid function as solvents in the polymerization reaction of the acrylic monomers. Additionally, while the rosin component remains unreacted, some of the fatty acid becomes graft polymerized onto the acrylic. Thus, the resulting rosin-fatty acid vinylic polymer compositions have characteristics which differ from the traditional melt blends of flake acrylic fatty acid rosin. Such rosin-fatty acid vinylic polymer compositions are well-suited for use as support resins and grind resin for inks (and other coating applications), as they tend to improve both the gloss and the leveling properties of the coating formulations. Such rosin-fatty acid vinylic polymer compositions are also well-suited for use as sizing compositions and as moisture vapor barrier coatings for paper and other cellulosic materials. The rosin-fatty acid vinylic polymer compositions may also be employed to produce other polymeric compositions, such as styrene emulsion polymer and copolymers, acrylic polymers and copolymers, vinyl acetate polymers and copolymers, and the like.

Fatty acids which are suitable for use in the present method include those fatty acids which contain a range of carbon atoms from about C₁₂ to about C₂₄; with the preferred range being from about C₁₆ to C₂₀. It is further preferred that the fatty acid be vegetable or tall oil based. It is most preferred that the fatty acid be tall oil based and contain from about 15% to about 18% conjugated double bonds.

It is preferred to add from about 20% to about 50% by total weight of the fatty acid rosin mixture of fatty acid.

Rosins which are suitable for use in the present method include wood rosin, tall oil rosin, gum rosin, and the like. The use of tall oil rosin is preferred. It is further preferred to add from about 50% to about 80% by total weight of the fatty acid rosin mixture of rosin.

It is preferred to add from about 20% to about 25% by total weight of the monomer mixture of acrylic acid, methacrylic acid, and combinations thereof.

It is preferred to add from about 60% to about 70% by total weight of the monomer mixture of vinylic monomers. Suitable vinylic monomers include styrenic monomers, acrylic monomers, methacrylic monomers, and the like. It is preferred that the vinylic monomers be a mixture, preferably including at least one monoalkenyl aromatic monomer and at least one acrylic monomer. The monoalkenyl aromatic monomer to be employed includes, for example, alpha-methyl styrene, styrene, vinyl toluene, tertiary butyl styrene, ortho-chlorostyrene, and mixtures thereof.

The term "acrylic monomer" as employed herein includes acrylic or methacrylic acid, esters of acrylic or methacrylic acid and derivatives and mixtures thereof. Examples of suitable acrylic monomers include the following methacrylate esters: methyl methacrylate, ethyl methacrylate, n-propyl methacrylate, n-butyl methacrylate, isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate, benzyl methacrylate, allyl methacrylate, 2-n-butoxyethyl methacrylate, 2-chloroethyl methacrylate, sec-butyl-methacrylate, tert-butyl methacrylate, 2-ethybutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, and tetrahydropyranyl methacrylate.

Other suitable acrylic monomers include methacrylic acid derivatives such as: methacrylic acid and its salts, methacrylonitrile, methacrylamide, N-methylmethacrylamide, N-ethylmethacrylamide, N,N-diethymethacrylamide, N,N-dimethylmethacrylamide, N-phenyl-methacrylamide, and methacrolein.

Typical acrylate esters employed include: methyl acrylate, ethyl acrylate, n-propyl acrylate, isopropyl acrylate, n-butyl acrylate, and n-decyl acrylate.

Acrylic acid derivatives employed as the acrylic monomer include: acrylic acid and its salts, acrylonitrile, acrylamide, methyl alpha-chloroacrylate, methyl 2-cyanoacrylate, N-ethylacrylamide, N,N-diethylacrylamide, and acrolein.

The present invention method is also applied to the preparation of copolymers from mixtures of two or more acrylic monomers such as termonomers and tetramonomers. It is also contemplated that mixtures of at least one acrylic monomer and at least one non-acrylic ethylenic monomer may be polymerized with monoalkenyl aromatic monomers in accordance with the present method.

Suitable ethylenic monomers include: vinyl pyridine, vinyl pyrollidone, sodium crotonate, methyl crotonate, crotonic acid, and maleic anhydride.

The type of polymerization initiator suitable for use in the present method is known in the art to depend upon the desired temperature for the reaction. Suitable initiators include, but are not limited to, the following: t-butyl peroxide, t-butyl peroxybenzoate, t-butyl peroctoate, cumene hydroperoxide, azobisisobutyronitrile, benzoyl peroxide, ammonium persulfate, and combinations thereof. It is preferred to add from about 1.0% to about 3.0% by total weight of the monomer mixture of polymerization initiator.

Where desired, a chain transfer agent may be employed in the present method. Chain transfer agents which are suitable for use in the above reaction include, but are not limited to, the following: dodecyl mercaptan, mercaptoacetic acid, mercaptopropionic acid, octyl mercaptan, 2-mercaptoethanol, and combinations thereof. Where employed, it is preferred to use an amount of chain transfer agent in the range of from about 0.5% to about 2.0% by total weight of the monomer mixture.

Where desired, a hydrocarbon solvent may be employed in the present method. Suitable hydrocarbon solvents include aromatic solvents, aliphatic solvents, and combinations thereof. Where employed, it is preferred to use an amount of hydrocarbon solvent in the range of about 1.0% to about 4.0% by total weight of the monomer mixture.

Where desired, the addition polymerization reaction may be carried out via the use of a continuous bulk polymerization process. The employment of such a process is well within the ability of those skilled in the art.

Rosin-fatty acid vinylic polymer compositions which are suitable for use as support resins, grind resins, and/or moisture vapor barrier coatings for ink and overprint applications have an acid number in the range of about 175 to about 500; with the preferred range being about 190 to about 230.

Where employed as a sizing composition, the rosin-fatty acid vinylic polymer compositions should be properly neutralized in order to disperse the polymer composition in water for application to the cellulosic materials. A sufficient amount of alum should also be employed to permit the formation of the proper aluminum resinate for the desired sizing purpose. The proper addition of such additives for specific applications are well-known to those skilled in the art.

As appreciated in the art, the exact components and properties of components desired for any coating application can vary and, therefore, routine experimentation may be required to determine the optional components and proportions of components for a given application and desired properties.

The following examples are provided to further illustrate the present invention and are not to be construed as limiting the invention in any manner.

### EXAMPLE 1

A rosin-fatty acid vinylic polymer composition was prepared via the following method. A reactor vessel equipped with a thermometer, stirrer, monomer feed pump, and a blanket nitrogen intake line was charged at room temperature with a mixture of 200 grams of L-5® Fatty Acid (a tall oil fatty acid composition commercially available from Westvaco Corporation) and 200 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 420 grams of styrene, 180 grams of acrylic acid, 14 grams of di-tert-butyl peroxide, and 42 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 1") was allowed to cool prior to being evaluated (see Table I below).

A solution which can be employed as a paper sizing composition may be prepared by mixing 46.4% (by total weight of the solution) of Polymer No. 1, 1.2% of a tall oil fatty acid potassium salt, 1.6% of a dicarboxylic rosin potassium salt, 0.8% of sodium chloride, 50.0% deionized water, and a neutralizing amount of potassium hydroxide in a blender. The resulting solution may be applied to cellulosic materials as a size to impart a hydrophobic character to the material.

### EXAMPLE 2

A rosin-fatty acid vinylic polymer composition was prepared via the following method. A reactor vessel equipped with a thermometer, stirrer, monomer feed pump, a blanket nitrogen intake line was charged at room temperature with a mixture of 200 grams of L-5® Fatty Acid (a tall oil fatty acid composition commercially available from Westvaco Corporation) and 200 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 420 grams of styrene, 180 grams of acrylic acid, 14 grams of di-tert-butyl peroxide, and 42 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 2") was allowed to cool prior to being evaluated (see Table I below).

A solution which can be employed to produce both ink and overprint formulations, as well as ink grind bases, was prepared by mixing 270.0 grams of Polymer No. 2, 67.8 grams of ammonium hydroxide, and 562.2 grams of deionized water in a blender. The resulting solution had a pH of 9.3, a solid levels of 34.7, and a Brookfield viscosity of 560 Pa.s (560 cps).

A solution which can be employed as a paper sizing composition may be prepared by mixing 47.6% (by total weight of the solution) of Polymer No. 2, 1.6% of a dicarboxylic rosin potassium salt, 0.8% of sodium chloride, 50.0% deionized water, and a neutralizing amount of potassium hydroxide in a blender.

### EXAMPLE 3

A rosin-fatty acid vinylic polymer composition was prepared via the following method. A reactor vessel equipped with a thermometer, stirrer, monomer feed pump, a blanket nitrogen intake line was charged at room temperature with a mixture of 360 grams of L-5® Fatty Acid (a tall oil fatty acid composition commercially available from Westvaco Corporation) and 40 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 340 grams of styrene, 260 grams of acrylic acid, 14 grams of di-tert-butyl peroxide, and 42 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 3") was allowed to cool prior to being evaluated (see Table I below).

A solution which can be employed as a paper sizing composition may be prepared by mixing 45.0% (by total weight of the solution) of Polymer No. 3, 1.9% of a tall oil fatty acid sodium salt, 2.3% of a dicarboxylic rosin sodium salt, 0.8% of sodium chloride, 50.0% deionized water, and a neutralizing amount of sodium hydroxide in a blender.

### EXAMPLE 4

A rosin-fatty acid vinylic polymer composition was prepared via the following method. A reactor vessel equipped with a thermometer, stirrer, monomer feed pump, a blanket nitrogen intake line was charged at room temperature with a mixture of 360 grams of L-5® Fatty Acid (a tall oil fatty acid composition commercially available from Westvaco Corporation) and 40 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 420 grams of styrene, 180 grams of acrylic acid, 28 grams of di-tert-butyl peroxide, and 28 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 4") was evaluated (see Table I below).

A solution which can be employed to produce both ink and overprint formulations, as well as ink grind bases, was prepared by mixing 270.0 grams of Polymer No. 4, 67.8 grams of ammonium hydroxide, and 562.2 grams of deionized water in a blender. The resulting solution had a pH of 8.2, a solid levels of 33.8, and a Brookfield viscosity of 19,600 Pa.s (19,600 cps).

### EXAMPLE 5

A rosin-fatty acid vinylic polymer composition was prepared via the following method. A reactor vessel equipped with a thermometer, stirrer, monomer feed pump, a blanket nitrogen intake line was charged at room temperature with a mixture of 200 grams of L-5® Fatty Acid (a tall oil fatty acid composition commercially available from Westvaco Corporation) and 200 grams t, of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 380 grams of styrene, 220 grams of acrylic acid, 21 grams of di-tert-butyl peroxide, and 35 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 5") was evaluated (see Table I below).

A solution which can be employed to produce both ink and overprint formulations, as well as ink grind bases, was prepared by mixing 270.0 grams of Polymer No. 5, 67.8 grams of ammonium hydroxide, and 562.2 grams of deionized water in a blender. The resulting solution had a pH of 9.3, a solid levels of 33.4, and a Brookfield viscosity of 1,070 Pa.s (1,070 cps).

A solution which can be employed as a paper sizing composition may be prepared by mixing 52% (by total weight of the solution) of Polymer No. 5, 2% of a tall oil fatty acid sodium salt, 2% of a dicarboxylic rosin potassium salt, 1% of potassium chloride, 43% deionized water, and a neutralizing amount of potassium hydroxide in a blender.

### EXAMPLE 6

A rosin-fatty acid vinylic polymer composition was prepared via the following method. A reactor vessel equipped with a thermometer, stirrer, monomer feed pump, a blanket nitrogen intake line was charged at room temperature with a mixture of 280 grams of L-5® Fatty Acid (a tall oil fatty acid composition commercially available from Westvaco Corporation) and 120 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 420 grams of styrene, 180 grams of acrylic acid, 14 grams of di-tert-butyl peroxide, and 42 grams of cumene hydroperoxide. After the addition of Charge A was completed, the reaction mixture was held at 150° C for an additional hour. At that time 4 grams of cumene hydroperoxide was added and the reaction mixture was held at 150°C for an additional two hours. The temperature of the reaction mixture was then raised to 180° C and vacuum was applied to remove any unreacted materials. The resulting rosin-fatty acid vinylic polymer (hereafter referred to as "Polymer No. 6") was evaluated (see Table I below).

A solution which can be employed to produce both ink and overprint formulations, as well as ink grind bases, was prepared by mixing 270.0 grams of Polymer No. 6, 67.8 grams of ammonium hydroxide, and 562.2 grams of dionized water in a blender. The resulting solution had a pH of 8.2, a solid levels of 33.3, and a Brookfield viscosity of 45,500 Pa.s (45,500 cps).

A solution which can be employed as a paper sizing composition may be prepared by mixing 44.0% (by total weight of the solution) of Polymer No. 6, 1.5% of a tall oil fatty acid potassium salt, 2.0% of a dicarboxylic rosin sodium salt, 0.5% of sodium chloride, 52.0% deionized water, and a neutralizing amount of sodium hydroxide in a blender.

### EXAMPLE 7

A rosin-fatty acid vinylic polymer composition was prepared via the following method. A reactor vessel equipped with a thermometer, stirrer, monomer feed pump, a blanket nitrogen intake line was charged at room temperature with a mixture of 280 grams of L-5® Fatty Acid (a tall oil fatty acid composition commercially available from Westvaco Corporation) and 120 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 340 grams of styrene, 260 grams of acrylic acid, 14 grams of di-tert-butyl peroxide, and 42 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 7") was evaluated (see Table I below).

A solution which can be employed to produce both ink and overprint formulations, as well as ink grind bases, was prepared by mixing 270.0 grams of Polymer No. 7, 67.8 grams of ammonium hydroxide, and 562.2 grams of dionized water in a blender. The resulting solution had a pH of 7.9, a solid levels of 34.0, and a Brookfield viscosity of 1,000 Pa.s (1,000 cps).

### EXAMPLE 8

A rosin-fatty acid vinylic polymer composition was prepared via the following method. A reactor vessel equipped with a thermometer, stirrer, monomer feed pump, a blanket nitrogen intake line was charged at room temperature with a mixture of 200 grams of L-5® Fatty Acid (a tall oil fatty acid composition commercially available from Westvaco Corporation) and 200 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 380 grams of styrene, 220 grams of acrylic acid, 8 grams of di-tert-butyl peroxide, and 8 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 8") was allowed to cool prior to being evaluated (see Table I below).

A solution which can be employed to produce both ink and overprint formulations, as well as ink grind bases, was prepared by mixing 270.0 grams of Polymer No. 8, 67.8 grams of ammonium hydroxide, and 562.2 grams of dionized water in a blender. The resulting solution had a pH of 8.0, a solid levels of 35.4, and a Brookfield viscosity of 32,500 Pa.s (32,500 cps).

### EXAMPLE 9

A rosin-fatty acid vinylic polymer composition was prepared via the following method. A reactor vessel equipped with a thermometer, stirrer, monomer feed pump, a blanket nitrogen intake line was charged at room temperature with a mixture of 240 grams of L-5® Fatty Acid (a tall oil fatty acid composition commercially available from Westvaco Corporation) and 160 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 380 grams of styrene, 220 grams of acrylic acid, 7 grams of di-tert-butyl peroxide, and 20 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 9") was allowed to cool prior to being evaluated (see Table I below).

A solution which can be employed as a paper sizing composition may be prepared by mixing 50.0% (by total weight of the solution) of Polymer No. 9, 1.8% of a tall oil fatty acid potassium salt, 1.2% of a dicarboxylic rosin sodium salt, 1.0% of sodium chloride, 46.0% deionized water, and a neutralizing amount of potassium hydroxide in a blender. The resulting solution may be applied to cellulosic materials as a size to impart a hydrophobic character to the material.

**TABLE I**

| Properties Of Rosin-Fatty Acid Vinylic Polymer Compositions | | | |
|---|---|---|---|
| Support Resin | PROPERTIES | | |
| | MW¹ | Acid No. | Softening Pt (°C) |
| Polymer 1 | 8,939 | 194 | 101 |
| Polymer 2 | 8,939 | 197 | 99 |
| Polymer 3 | 5,894 | 249 | 81 |
| Polymer 4 | 4,913 | 197 | 76 |
| Polymer 5 | 7,314 | 235 | 111 |
| Polymer 6 | 7,588 | 199 | 85 |
| Polymer 7 | 8,400 | 247 | 104 |
| Polymer 8 | 7,613 | 138 | 108 |
| Polymer 9 | 7,873 | 237 | 101 |
| H-2702² | 7,000 | 206 | 140 |
| H-2701² | 2,500 | 210 | 135 |
| H-2702² | 7,000 | 206 | 155 |
| M-101³ | 7,000 | 204 | 134 |
| J-678⁴ | 8,400 | 205 | 145 |
| J-682⁴ | 1,500 | 243 | 105 |
| J-690⁴ | 16,000 | 240 | 136 |
| C-1162⁵ | 2,300 | 216 | 125 |

| | | | |
|---|---|---|---|
| ¹ Weight Average Molecular Weight. | | | |
| ² JONREZ® H-2702 and H-2701 are acrylic resins commercially available from Westvaco Corporation. | | | |
| ³ MOREZ® M-101 is an acrylic resin commercially available from Morton International Inc. | | | |
| ⁴ JONCRYL® J-678, J-682, and J-690 are acrylic resins commercially available from S.C. Johnson and Son, Inc. | | | |
| ⁵ CARBOSET® C-1162 is an acrylic resin commercially available from B. F. Goodrich. | | | |

As shown by the data in Table I, the rosin-fatty acid vinylic polymer compositions can be tailored to have chemical characteristics and properties similar to commercially available, commonly employed, polymeric resins.

### EXAMPLE 10

A rosin-fatty acid vinylic polymer composition was prepared via the following method. A reactor vessel equipped with a thermometer, stirrer, monomer feed pump, a blanket nitrogen intake line was charged at room temperature with a mixture of 475.0 grams of L-5® Fatty Acid (a tall oil fatty acid composition commercially available from Westvaco Corporation), 185.0 grams of Rosin SS® (a tall oil rosin composition commercially available from Westvaco Corporation), 45.0 grams of toluene, and 0.6 grams of hypophosphoric acid. The mixture was heated under a nitrogen blanket to 150° C and held at that temperature, whereupon Charge A was added, with stirring, over a three hour period. Charge A consisted of a mixture of 946.0 grams of styrene, 594.0 grams of acrylic acid, and 38.5 grams of di-tert-butyl peroxide. After the addition of Charge A was completed, the reaction mixture was held at 150° C for an additional hour. At that time 4.4 grams of di-tert-butyl peroxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 10") was allowed to cool.

A solution which can be employed to produce both ink and overprint formulations was prepared by mixing 112.5 grams of Polymer No. 10, 36.5 grams of a 26% ammonia solution, 150.0 grams of deionized water, and 1.0 grams of FOAM BLAST® 327 (a defoaming composition commercially available from Ross Chemical Company) in a blender. The resulting solution had a pH of 9.0 and a solid levels of 37.5.

An overprint varnish was prepared by mixing 38.0 grams of the Polymer No. 10 solution with 100.0 grams of JONREZ® A-2364 (a styrene acrylic emulsion composition commercially available from Westvaco Corporation), and 2.0 grams of deionized water. For comparison purposes, a standard overprint varnish (hereafter referred to as "Standard") was prepared by mixing 40.0 grams of JONREZ® H-2701(a styrene acrylic emulsion composition commercially available from Westvaco Corporation) at a solids level of 35% and 100.0 grams of JONREZ® A-2364 (an acrylic support resin composition commercially available from Westvaco Corporation). The overprint varnishes were applied to various paper substrates via the use of a wire wound rod (#7) and a gravure hand proofer. The glosses were measured, and the results are listed in Table II below.

**TABLE II**

| Gloss Evaluations Of Overprint Varnish Formulations | | | | |
|---|---|---|---|---|
| **Substrates** | **Polymer No. 10** | | **Standard** | |
| | 60° Glossmeter⁵ | 75° Glossmeter⁶ | 60° Glossmeter⁵ | 75° Glossmeter⁶ |
| Sealed Leneta®¹ | 79.6 | 96.2 | 80.1 | 96.1 |
| Unsealed Leneta®¹ | 72.5 | 94.0 | 73.5 | 93.5 |
| Coated Paper² | 81.2 | 96.6 | 79.8 | 96.3 |
| Kraft Paper³ | 11.1 | 29.0 | 11.1 | 27.4 |
| Fine Paper⁴ | 11.4 | 33.9 | 11.8 | 34.3 |

| | | | | |
|---|---|---|---|---|
| ¹ LENETA® N2A Opacity Chart. | | | | |
| ² 12-point C1S PRINTKOTE® paper (a coated paper commercially available from Westvaco Corporation). | | | | |
| ³ KRAFTPAK® paper (a Kraft paper commercially available from Westvaco Corporation). | | | | |
| ⁴ HAMMERMILL® BOND paper (a fine paper commercially available from International Paper Company). | | | | |
| ⁵ The respective glosses were measured via a Pacific Scientific GLOSSGARD II® 60° Glossmeter. | | | | |
| ⁶ The respective glosses were measured via a Pacific Scientific GLOSSGARD II® 75° Glossmeter. | | | | |

### EXAMPLE 11

A rosin-fatty acid vinylic polymer composition was prepared via the following method. A reactor vessel equipped with a thermometer, stirrer, monomer feed pump, a blanket nitrogen intake line was charged at room temperature with a mixture of 450.0 grams of L-5® Fatty Acid (a tall oil fatty acid composition commercially available from Westvaco Corporation), 450.0 grams of Rosin SS® (a tall oil rosin composition commercially available from Westvaco Corporation) , and 1.5 grams of hypophosphoric acid. The mixture was heated under a nitrogen blanket to 150° C and held at that temperature, whereupon Charge A was added, with stirring, over a three hour period. Charge A consisted of a mixture of 427.5 grams of styrene, 427.5 grams of (alpha)methyl styrene, 495.0 grams of acrylic acid, 16.0 grams of di-tert-butyl peroxide, and 95.0 grams of cumene hydroperoxide. After the addition of Charge A was completed, the reaction mixture was held at 150° C for an additional hour. At that time 9.0 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer (hereafter referred to as "Polymer No. 11") was allowed to cool.

A solution which can be employed to produce both ink and overprint formulations, as well as ink grind bases, was prepared by mixing 270.0 grams of Polymer No. 11, 67.8 grams of a 58% ammonium hydroxide solution, and 562.2 grams of deionized water in a blender. The resulting solution had a pH of 9.24, a solid levels of 30.0%, and a Brookfield viscosity of 110 Pa.s. (110 cps).

An overprint varnish was prepared by mixing 75.0 grams of the Polymer No. 11 solution, 10.0 grams of JONREZ® W-2320 (a wax emulsion composition commercially available from Westvaco Corporation), 9.5 grams of deionized water, 5.0 grams of isopropyl alcohol, and 0.5 grams of FOAM BLAST® 327 (a defoaming composition commercially available from Ross Chemical Company) in a blender. For comparison purposes, a standard overprint composition was prepared using the same formulation except that 75.0 grams of JONREZ® A-2367 (an acrylic support resin composition commercially available from Westvaco Corporation) was substituted for the Polymer No. 11 solution. The overprint varnishes were applied to the coated side of WESTVACO CIS (a coated stock paper commercially available from Westvaco Corporation) via the use of a wire wound rod (#7) and the gloss (75°) of the series of draw downs were measured. The paper coated with the Polymer No. 11 varnish had an average gloss measurement of 88.0, while the paper coated with the standard acrylic varnish formulation had an average gloss measurement of 81.7.

### EXAMPLE 12

A rosin-fatty acid vinylic polymer composition was prepared via the following method. A reactor vessel equipped with a thermometer, stirrer, monomer feed pump, a blanket nitrogen intake line was charged at room temperature with a mixture of 200 grams of L-5® Fatty Acid (a tall oil fatty acid composition commercially available from Westvaco Corporation), 200 grams of Rosin SS® (a tall oil rosin composition commercially available from Westvaco Corporation), 30 grams of toluene, and 0.5 grams of hypophosphoric acid. The mixture was heated under a nitrogen blanket to 150° C and held at that temperature, whereupon Charge A was added, with stirring, over a three hour period. Charge A consisted of a mixture of 340 grams of styrene, 260 grams of acrylic acid, 10 grams of di-tert-butyl peroxide, and 7 grams of cumene hydroperoxide. After the addition of Charge A was completed, the reaction mixture was held at 150° C for an additional hour. At that time 4 grams of cumene hydroperoxide was added and the reaction mixture was held at 150° C for an additional two hours. The temperature of the reaction mixture was then raised to 180° C and vacuum was applied to remove any unreacted materials. The resulting rosin-fatty acid vinylic polymer was allowed to cool.

### EXAMPLE 13

A rosin-fatty acid vinylic polymer composition was prepared using a continuous stirred tank reactor. A resin pump continuously fed (at a rate of 7.5 grams per minute) a feed mixture of 221.0 grams of L-5® Fatty Acid (a tall oil fatty acid composition commercially available from Westvaco Corporation), 220.6 grams of Rosin SS® (a tall oil rosin composition commercially available from Westvaco Corporation), 316.1 grams of styrene, 316.1 grams of (alpha)methyl styrene, 397.4 grams of acrylic acid, and 28.8 grams of di-tert-butyl peroxide into a reactor heated to a temperature of 160° C. and vacuum was applied to remove any unreacted materials. The resulting rosin-fatty acid vinylic polymer (hereafter referred to as "Polymer No. 13") had a molecular weight of 10,350.

To a blend vessel was charged 9% (by total weigh of the mixture) of Polymer No. 13, *t* 48% of JONREZ® E-2051 (a styrene acrylic emulsion commercial available from Westvaco Corporation), 1.2% of JONREZ® W-2320 (a wax dispersion commercially available from Westvaco Corporation), 40.0% of DREW BD2001® (a blue pigment commercially available from Drew Chemical Company) and 1.8% by weight of deionized water. The mixture was blended to produce the an ink formulation which exhibited excellent gloss and print qualities.

A solution which can be employed as a paper sizing composition may be prepared by mixing 51.0% (by total weight of the solution) of Polymer No. 13, 2.0% of a dicarboxylic rosin sodium salt, 1.0% of potassium chloride, 46.0% deionized water, and a neutralizing amount of potassium hydroxide in a blender.

### EXAMPLE 14

A rosin-fatty acid vinylic polymer composition was prepared via the following method. A reactor vessel equipped with a thermometer, stirrer, monomer feed pump, and a blanket nitrogen intake line was charged at room temperature with a mixture of 200.0 grams of L-5® Fatty Acid (a tall oil fatty acid composition commercially available from Westvaco Corporation) and 200.0 grams of Rosin SS® (a tall oil rosin composition commercially available from Westvaco Corporation). The mixture was heated under a nitrogen blanket to 150° C and held at that temperature, whereupon Charge A was added, with stirring, over a three hour period. Charge A consisted of a mixture of 183.0 grams of styrene, 183.0 grams of alpha-methyl styrene, 212.0 grams of acrylic acid, and 39.1 grams of di-tert-butyl peroxide. After the addition of Charge A was completed, the reaction mixture was held at 150° C for an additional three hours. The temperature of the reaction mixture was then raised to 180° C and vacuum was applied to remove any unreacted materials. The resulting rosin-fatty acid vinylic polymer (hereafter referred to as "Polymer No. 14") was allowed to cool prior to being evaluated (see Table III below).

A 23.0% solids solution of Polymer No. 14 was prepared in deionized water and neutralized with ammonium hydroxide. The resulting moisture vapor barrier coating formulation was evaluated and the results listed in Table III below.

### EXAMPLE 15

A rosin-fatty acid vinylic polymer composition was prepared via the following method. A reactor vessel equipped with a thermometer, stirrer, monomer feed pump, a blanket nitrogen intake line was charged at room temperature with a mixture of 400.0 grams of stearic acid. The mixture was heated under a nitrogen blanket to 150° C and held at that temperature, whereupon Charge A was added, with stirring, over a three hour period. Charge A consisted of a mixture of 183.0 grams of styrene, 91.0 grams of lauryl methacrylate, 91.0 grams of alpha methyl styrene, 212.0 grams of acrylic acid, and 22.3 grams of di-tert-butyl peroxide. After the addition of Charge A was completed, the reaction mixture was held at 150° C for an additional three hours. The temperature of the reaction mixture was then raised to 180° C and vacuum was applied to remove any unreacted materials. The resulting rosin-fatty acid vinylic polymer (hereafter referred to as "Polymer No. 15") was allowed to cool prior to being evaluated (see Table III below).

A 23.0% solids solution of Polymer No. 15 was prepared in deionized water and neutralized with ammonium hydroxide. The resulting moisture vapor barrier coating formulation was evaluated and the results listed in Table III below.

For comparison purposes, a series of moisture vapor barrier coating formulations were prepared wherein a standard rosin polymer derivative was substituted for the above-noted rosin-fatty acid vinylic polymers. These standard formulations had solids levels ranging from about 17% to about 27% solids in deionized water and were neutralized with ammonium hydroxide. The results of the evaluations are listed in Table III below.

**TABLE III**

| Evaluations Of Moisture Vapor Barrier Coating Formulations | | | | |
|---|---|---|---|---|
| Polymer | % Solids | Viscosity¹ | Bar No.² | MVTR³ |
| Polymer No. 14 | 25.9 | 10.0 | 8 | 7.0 |
| Polymer No. 14 | 25.9 | 10.0 | 12 | 3.5 |
| Polymer No. 15 | 23.0 | 10.0 | 8 | 4.8 |
| Polymer No. 15 | 23.0 | 10.0 | 12 | 3.2 |
| SM-705⁴ | 26.0 | 13.5 | 8 | 15.5 |
| SM-724⁴ | 17.3 | 13.0 | 12 | 15.5 |
| SM-727⁴ | 26.4 | 9.0 | 8 | 11.4 |

| | | | | |
|---|---|---|---|---|
| ¹ Number of seconds in a #3 Zahn cup. | | | | |
| ² Coatings were drawn down by hand using either a #8 or #12 wire-wound Meyer bar onto 12-point C2S PRINTKOTE® board (a coated board commercially available from Westvaco Corporation). | | | | |
| ³ The moisture vapor transmission rate (MVTR) was determined using the TAPPI Test Method T-448 om-89 under conditions of 72°C and 50% | | | | |
| ⁴ JONREZ® SM-705, JONREZ® SM-724, and JONREZ® SM-727 are water-dispersable rosin ester polymer compositions commercially available from Westvaco Corporation. | | | | |

### EXAMPLE 16

A rosin-fatty acid vinylic polymer composition was prepared via the following method. A reactor vessel equipped with a thermometer, stirrer, monomer feed pump, a blanket nitrogen intake line was charged at room temperature with a mixture of 475 grams of L-5® Fatty Acid (a tall oil fatty acid composition commercially available from Westvaco Corporation), 185 grams of Rosin SS® (a tall oil rosin composition commercially available from Westvaco Corporation), 45 grams of toluene, and 0.6 grams of hypophosphoric acid. The mixture was heated under a nitrogen blanket to 150° C and held at that temperature, whereupon Charge A was added, with stirring, over a three hour period. Charge A consisted of a mixture of 946 grams of styrene, 594 grams of acrylic acid, and 38.5 grams of di-tert-butyl peroxide. After the addition of Charge A was completed, the reaction mixture was held at 150° C for an additional hour. At that time 4.4 grams of di-tert-butyl peroxide was added and the reaction mixture was held at 150° C for an additional two hours. The temperature of the reaction mixture was then raised to 180° C and vacuum was applied to remove any unreacted materials. The reaction mixture was then raised to 180° C, and vacuum was applied to remove any unreacted materials. The resulting rosin-fatty acid vinylic polymer (hereafter referred to as "Polymer No. 16") was allowed to cool.

A solution was prepared which can be employed to produce grind bases by mixing 112.5 grams of Polymer No. 16, 36.5 grams of a 26% ammonia solution, 150.0 grams of deionized water, and 1.0 grams of FOAM BLAST® 327 (a defoaming composition commercially available from Ross Chemical Company) in a blender. The resulting solution had a pH of 9.0 and a solid levels of 37.5.

The varnish was utilized to produce a grind base via the procedure of combining 60% (by weight of the mixture) of the above varnish, 25% of phthalocyanine blue (manufactured by Sun Chemical Company), 0.5%of DC-65 (a silicone additive commercially available from Dow Chemical Company), and 14.5% of deionized water in a Waring Blender. After five minutes of predispersion, the batch was poured in a "quicky mill" with 100.0 g of shot and placed on a RED DEVIL paint shaker for one hour. For comparison purposes, a standard grind base was prepared via the same procedure except that the varnish was replaced with 60% (by weight ) of JONREZ® D-2104 (a styrene acrylic solution resin composition commercially available from Westvaco Corporation).

The grind bases were used to prepare bleaching formulations consisting of 2.6 grams of the respective pigment dispersions mixed with 5.0 grams of deionized water and 20.0 grams of a titanium dioxide dispersion. The resulting inks were drawn down using a number 5 Meyer Bar onto a Leneta® N2A Opacity Chart in order to evaluate the gloss of the inks. The results of the evaluations are listed in Table IV below.

**TABLE IV**

| Gloss Evaluations Of Bleached Ink Formulations | | |
|---|---|---|
| **Chart Title** | **Polymer No. 1** | **Standard** |
| | 60° Glossmeter² | 60° Glossmeter² |
| Sealed Leneta®¹ | 40.9 | 39.0 |
| Unsealed Leneta®¹ | 45.9 | 44.5 |

| | | |
|---|---|---|
| ¹ LENETA® N2A Opacity Chart | | |
| ² The respective glosses were measured via a Pacific Scientific GLOSSGARD II® 60° Glossmeter. | | |

The respective glosses were measured via a Pacific Scientific GLOSSGARD II® 60° Glossmeter.

As the results in Table IV demonstrate, the ink formulated with the vinylic polymer grinding resin had superior gloss characteristics when compared to a ink formulated with a traditional grinding resin.

Many modifications and variations of the present invention will be apparent to one of ordinary skill in the art in light of the above teachings. It is therefore understood that the scope of the invention is not to be limited by the foregoing description, but rather is to be defined by the claims appended hereto.

## Claims

1. A method for producing a rosin-fatty acid vinylic polymer composition which comprises reacting in an addition polymerization reaction:
(a) about 20.0% to about 60.0% by total weight of the reactants of a fatty acid rosin mixture comprising:
(1) about 10.0% to about 90.0% by total weight of the mixture of fatty acid, and
(2) about 10.0% to about 90.0% by total weight of the mixture of rosin; and
(b) about 40.0%, to about 80.0% by total weight of the reactants of a monomer mixture comprising:
(1) about 15.0% to about 45.0% by total weight of the mixture of a member selected from the group consisting of acrylic acid, methacrylic acid, and combinations thereof;
(2) about 55.0% to about 85.0% by total weight of the mixture of a member selected from the group consisting of vinylic monomers and combinations thereof;
(3) about 0.5% to about 5.0% by total weight of the mixture of a polymerization initiator;
(4) up to about 4.0% by total weight of the mixture of a chain transfer agent; and
(5) up to about 30% by total weight of the mixture of a hydrocarbon solvent;
to produce the rosin-fatty acid vinylic polymer composition.

2. The method of claim 1 which further comprises reacting in an addition polymerization reaction:
(a) about 20.0% to about 60.0% by total weight of the reactants of a fatty acid rosin mixture comprising:
(1) about 20.0% to about 50.0% by total weight of the mixture of fatty acid, and
(2) about 50.0% to about 80.0% by total weight of the mixture of rosin; and
(b) about 40.0% to about 80.0% by total weight of the reactants of a monomer mixture comprising:
(1) about 20.0% to about 25.0% by total weight of the mixture of a member selected from the consisting of acrylic acid, methacrylic acid, and combinations thereof;
(2) about 60.0% to about 70.0% by total weight of the mixture of a member selected from the group consisting of vinylic monomers and combinations thereof;
(3) about 1.0% to about 3.0% by total weight of the mixture of a polymerization initiator;
(4) about 0.5% to about 2.0% by total weight of the mixture of a chain transfer agent; and
(5) about 1.0% to about 4.0% by total weight of -the mixture of a hydrocarbon solvent;
to produce the rosin-fatty acid vinylic polymer composition.

3. The method of claim 1 or 2 wherein the fatty acid is a member selected from the group consisting of fatty acids containing from 12 to 24 carbon atoms and combinations thereof.

4. The method of any one of claims 1 to 3 wherein the rosin is a member selected from the group consisting of tall oil rosin, wood rosin, gum rosin, and combinations thereof.

5. The method of any one of claims 1 to 4 wherein the vinylic monomer is a member selected from the group consisting of styrenic monomers, acrylic monomers, methacrylic monomers, and combinations thereof.

6. The method of any one of claims 1 to 4 wherein the vinylic monomer is a mixture containing at least one monoalkenyl aromatic monomer and at least one acrylic monomer.

7. The method of claim 6 wherein the monoalkenyl aromatic monomer is a member selected from the group consisting of alphamethyl styrene, styrene, vinyl toluene, tertiary butyl styrene, ortho-chlorostyrene, and combinations thereof.

8. The method of any one of claims 1 to 6 wherein the acrylic monomer is a member selected from the group consisting of methyl methacrylate, ethyl methacrylate, n-propyl methacrylate, n-butyl methacrylate, isopropyl methacrylate, isobutyl methacrylate, n-amyl methacrylate, n-hexyl methacrylate, isoamyl methacrylate, 2-hydroxyethyl methacrylate, 2-hydroxypropyl methacrylate, N,N-dimethylaminoethyl methacrylate, N,N-diethylaminoethyl methacrylate, t-butylaminoethyl methacrylate, 2-sulfoethyl methacrylate, trifluoroethyl methacrylate, glycidyl methacrylate, benzyl methacrylate, allyl methacrylate, 2-n-butoxyethyl methacrylate, 2-chloroethyl methacrylate, sec-butyl-metacrylate, tert-butyl methacrylate, 2-ethybutyl methacrylate, cinnamyl methacrylate, crotyl methacrylate, cyclohexyl methacrylate, cyclopentyl methacrylate, 2-ethoxyethyl methacrylate, furfuryl methacrylate, hexafluoroisopropyl methacrylate, methallyl methacrylate, 3-methoxybutyl methacrylate, 2-methoxybutyl methacrylate, 2-nitro-2-methylpropyl methacrylate, n-octylmethacrylate, 2-ethylhexyl methacrylate, 2-phenoxyethyl methacrylate, 2-phenylethyl methacrylate, phenyl methacrylate, propargyl methacrylate, tetrahydrofurfuryl methacrylate, tetrahydropyranyl methacrylate, methacrylic acid and its salts, methacrylonitrile, methacrylamide, N-methylmethacrylamide, N-ethylmethacrylamide, N,N-diethymethacrylamide, N,N-dimethylmethacrylamide, N-phenylmethacrylamide, methacrolein, methyl acrylate, ethyl acrylate, n-propyl acrylate, isopropyl acrylate, n-butyl acrylate, n-decyl acrylate, acrylic acid and its salts, acrylonitrile, acrylamide, methyl alpha-chloroacrylate, methyl 2-cyanoacrylate, N-ethylacrylamide, N,N-diethylacrylamide, acrolein, and combinations thereof.

9. The method of any one of claims 1 to 8 wherein the polymerization initiator is a member selected from the group consisting of t-butyl peroxide, t-butyl peroxybenzoate, t-butyl peroctoate, cumene hydroperoxide, azobisisobutyronitrile, benzoyl peroxide, ammonium persulfate and combinations thereof.

10. The method of any one of claims 1 to 9 wherein the chain transfer agent is a member selected from the group consisting of dodecyl mercaptan, mercaptoacetic acid, mercaptopropionic acid, octyl mercaptan, 2-mercaptoethanol, and combinations thereof.

11. The method of any one of claims 1 to 10 wherein the hydrocarbon solvent is a member selected from the group consisting of aromatic solvents, aliphatic solvents, and combinations thereof.

12. The method of any one of claims 1 to 11 which further comprises the use of a continuous bulk polymerization process for the addition polymerization reaction.

13. A rosin-fatty acid vinylic polymer composition obtainable by the method according to any one of claims 1 to 12.

14. The rosin-fatty acid vinylic polymer composition of claim 13 wherein the polymer has an acid number from about 175 to about 500.

15. The rosin-fatty acid vinylic polymer composition of claim 13 or 14 wherein the polymer has an acid number from about 190 to about 230.

16. A varnish for ink formulations comprising a dispersion of a rosin-fatty acid vinylic polymer composition as defined by any one of claims 13 to 15 or as obtainable by the method according to any one of claims 1 to 12.

17. A varnish for overprint formulations comprising an aqueous dispersion of a rosin-fatty acid vinylic polymer composition as defined in any one of claims 13 to 16 or as obtainable by the method according to any one of claims 1 to 12.

18. A grind base for ink formulations comprising an aqueous dispersion of a rosin-fatty acid vinylic polymer composition as defined in any one of claims 13 to 17 or as obtainable by the method of any one of claims 1 to 12.

19. A surface sizing composition for cellulosic materials comprising a neutralized aqueous dispersion of alum and a rosin-fatty acid vinylic polymer composition as defined in any one of claims 13 to 17 or as obtainable by the method of any one of claims 1 to 12.

20. A moisture barrier coating composition for cellulosic materials comprising an aqueous dispersion of a rosin-fatty acid vinylic polymer composition as defined in any one of claims 13 to 17 or obtainable by the method of any one of claims 1 to 12.

## Patentansprüche

1. Verfahren zur Herstellung einer Kolophonium-Fettsäure-Vinylpolymerzusammensetzung, umfassend Reaktion in einer Additionspolymerisationsreaktion von:
(a) etwa 20,0 % bis etwa 60,0 % des Gesamtgewichts der Reaktanten einer Fettsäure-Kolophonium-Mischung, umfassend:
(1) etwa 10,0 % bis etwa 90,0 % des Gesamtgewichts eine Fettsäuremischung und
(2) etwa 10,0 % bis etwa 90,0 % des Gesamtgewichts eine Kolophoniummischung; und
(b) etwa 40,0 % bis etwa 80,0 % des Gesamtgewichts der Reaktanten einer Monomermischung, umfassend:
(1) etwa 15,0 % bis etwa 45,0 % des Gesamtgewichts der Mischung eine Verbindung, ausgewählt aus der Gruppe, bestehend aus Acrylsäure, Methacrylsäure und Kombinationen davon;
(2) etwa 55,0 % bis etwa 85,0 % des Gesamtgewichts der Mischung eine Verbindung, ausgewählt aus der Gruppe, bestehend aus Vinylmonomeren und Kombinationen davon;
(3) etwa 0,5 % bis etwa 5,0 % des Gesamtgewichts der Mischung einen Polymerisationsinitiator;
(4) bis zu etwa 4,0 % des Gesamtgewichts der Mischung einen Kettenüberträger; und
(5) bis zu etwa 30 % des Gesamtgewichts der Mischung ein Kohlenwasserstofflösemittel;
um die Kolophonium-Fettsäure-Vinylpolymerzusammensetzung herzustellen.

2. Verfahren nach Anspruch 1, weiter umfassend Reaktion in einer Additionspolymerisationsreaktion von:
(a) etwa 20,0 % bis etwa 60,0 % des Gesamtgewichts der Reaktanten einer Fettsäure-Kolophonium-Mischung, umfassend:
(1) etwa 20,0 % bis etwa 50,0 % des Gesamtgewichts eine Fettsäuremischung und
(2) etwa 50,0 % bis etwa 80,0 % des Gesamtgewichts eine Kolophoniummischung; und
(b) etwa 40,0 % bis etwa 80,0 % des Gesamtgewichts der Reaktanten einer Monomermischung, umfassend:
(1) etwa 20,0 % bis etwa 25,0 % des Gesamtgewichts der Mischung eine Verbindung, ausgewählt aus der Gruppe, bestehend aus Acrylsäure, Methacrylsäure und Kombinationen davon;
(2) etwa 60,0 % bis etwa 70,0 % des Gesamtgewichts der Mischung eine Verbindung, ausgewählt aus der Gruppe, bestehend aus Vinylmonomeren und Kombinationen davon;
(3) etwa 1,0 % bis etwa 3,0 % des Gesamtgewichts der Mischung einen Polymerisationsinitiator;
(4) etwa 0,5 % bis etwa 2,0 % des Gesamtgewichts der Mischung einen Kettenüberträger; und
(5) etwa 1,0 % bis etwa 4,0 % des Gesamtgewichts der Mischung ein Kohlenwasserstofflösemittel;
um die Kolophonium-Fettsäure-Vinylpolymerzusammensetzung herzustellen.

3. Verfahren nach Anspruch 1 oder Anspruch 2,
**dadurch gekennzeichnet,**
**dass** die Fettsäure ein aus der Gruppe bestehend aus von 12 bis 24 Kohlenstoffatome enthaltenden Fettsäuren und deren Kombinationen ausgewähltes Mitglied ist.

4. Verfahren nach irgendeinem der Ansprüche 1 bis 3,
**dadurch gekennzeichnet,**
**dass** das Kolophonium ein aus der aus Tallölkolophonium, Wurzelkolophonium, Gummikolophonium bestehenden Gruppe und deren Kombinationen ausgewähltes Mitglied ist.

5. Verfahren nach irgendeinem der Ansprüche 1 bis 4,
**dadurch gekennzeichnet,**
**dass** das Vinylmonomer ein aus der aus Styrolmonomeren, Acrylmonomeren, Methacrylmonomeren bestehenden Gruppe und deren Kombinationen ausgewähltes Mitglied ist.

6. Verfahren nach irgendeinem der Ansprüche 1 bis 4,
**dadurch gekennzeichnet,**
**dass** das Vinylmonomer eine Mischung ist, die wenigstens ein monoalkenylaromatisches Monomer und wenigstens ein Acrylmonomer enthält.

7. Verfahren nach Anspruch 6,
**dadurch gekennzeichnet,**
**dass** das monoalkenyl-aromatische Monomer ein aus der aus α-Methylstyrol, Styrol, Vinyltoluol, tert-Butylstyrol, ortho-Chlorstyrol bestehenden Gruppe, und deren Kombinationen ausgewähltes Mitglied ist.

8. Verfahren nach irgendeinem der Ansprüche 1 bis 6,
**dadurch gekennzeichnet,**
**dass** das Acrylmonomer ein aus der Gruppe, bestehend aus Methylmethacrylat, Ethylmethacrylat, n-Propylmethacrylat, n-Butylmethacrylat, Isopropylmethacrylat, Isobutylmethacrylat, n-Amylmethacrylat, n-Hexylmethacrylat, Isoamylmethacrylat, 2-Hydroxyethylmethacrylat, 2-Hydroxypropylmethacrylat, N,N-Dimethylaminoethylmethacrylat, N,N-Diethylaminoethylmethacrylat, tert-Butylaminoethylmethacrylat, 2-Sulfoethylmethacrylat, Trifluorethylmethacrylat, Glycidylmethacrylat, Benzylmethacrylat, Allylmethacrylat, 2-n-Butoxyethylmethacrylat, 2-Chlorethylmethacrylat, sek-Butylmethacrylat, tert-Butylmethacrylat, 2-Ethylbutylmethacrylat, Zimtmethacrylat, Crotylmethacrylat, Cyclohexylmethacrylat, Cyclopentylmethacrylat, 2-Ethoxyethylmethacrylat, Furfurylmethacryiat, Hexafluoroisopropylmethacrylat, Methallylmethacrylat, 3-Methoxybutylmethacrylat, 2-Methoxybutylmethacrylat, 2-Nitro-2-methylpropylmethacrylat, Methacrylat, n-Octylmethacrylat, 2-Ethylhexylmethacrylat, 2-Phenoxyethylmethacrylat, 2-Phenylethylmethacrylat, Phenylmethacrylat, Propargylmethacrylat, Tetrahydrofurfurylmethacrylat, Tetrahydropyranylmethacrylat, Methacrylsäure und deren Salze, Methacrylnitril, Methacrylamid, N-Methylmethacrylamid, N-Ethylmethacrylamid, N,N-Diethylmethacrylamid, N,N-Dimethylmethacrylamid, N-Phenylmethacrylamid, Methacrolein, Methylacrylat, Ethylacrylat, n-Propylacrylat, Isopropylacrylat, n-Butylacrylat, n-Decylacrylat, Acrylsäure und deren Salze, Acrylnitril, Acrylamid, Methyl-a-chloracrylat, Methyl-2-cyanoacrylat, N-Ethylacrylamid, N,N-Diethylacrylamid, Acrolein und deren Kombinationen ausgewähltes Mitglied ist.

9. Verfahren nach irgendeinem der Ansprüche 1 bis 8,
**dadurch gekennzeichnet,**
**dass** der Polymerisationsinitiator ein aus der aus tert-Butylperoxid, tert-Butylperoxybenzoat, tert-Butylperoctoat, Cumolhydroperoxid, Azobisisobutyronitril, Benzoylperoxid, Ammoniumpersulfat bestehenden Gruppe und deren Kombinationen ausgewähltes Mitglied ist.

10. Verfahren nach irgendeinem der Ansprüche 1 bis 9,
**dadurch gekennzeichnet,**
**dass** der Kettenüberträger ein aus der aus Dodecylmercaptan, Mercaptoessigsäure, Mercaptopropionsäure, Octylmercaptan, 2-Mercaptoethanol bestehenden Gruppe, und deren Kombinationen ausgewähltes Mitglied ist.

11. Verfahren nach irgendeinem der Ansprüche 1 bis 10,
**dadurch gekennzeichnet,**
**dass** das Kohlenwasserstofflösemittel ein aus der aus aromatischen Lösemitteln, aliphatischen Lösemitteln bestehenden Gruppe und deren Kombinationen ausgewähltes Mitglied ist.

12. Verfahren nach irgendeinem der Ansprüche 1 bis 11,
umfassend die Verwendung eines kontinuierlichen Blockpolymerisationsverfahrens für die Additionspolymerisationsreaktion.

13. Kolophonium-Fettsäure-Vinylpolymerzusammensetzung,
erhältlich gemäß dem Verfahren nach irgendeinem der Ansprüche 1 bis 12.

14. Kolophonium-Fettsäure-Vinylpolymerzusammensetzung nach Anspruch 13,
**dadurch gekennzeichnet,**
**dass** das Polymer eine Säurezahl von etwa 175 bis etwa 500 aufweist.

15. Kolophonium-Fettsäure-Vinylpolymerzusammensetzung nach Anspruch 13 oder 14,
**dadurch gekennzeichnet,**
**dass** das Polymer eine Säurezahl von etwa 190 bis etwa 230 aufweist.

16. Lack für Tintenformulierungen, umfassend eine Dispersion einer Kolophonium-Fettsäure-Vinylpolymerzusammensetzung nach irgendeinem der Ansprüche 13 bis 15 oder wie durch das Verfahren nach irgendeinem der Ansprüche 1 bis 12 erhältlich.

17. Lack für Aufdruckformulierungen, umfassend eine wässerige Dispersion einer Kolophonium-Fettsäure-Vinylpolymerzusammensetzung nach irgendeinem der Ansprüche 13 bis 16 oder wie durch das Verfahren gemäß einem der Ansprüche 1 bis 12 erhältlich.

18. Anreibbasis für Tintenformulierungen, umfassend eine wässerige Dispersion einer Kolophonium-Fettsäure-Vinylpolymerzusammensetzung nach irgendeinem der Ansprüche 13 bis 17 oder wie gemäß dem Verfahren nach irgendeinem der Ansprüche 1 bis 12 erhältlich.

19. Oberfiächenleimzusammensetzung für Cellulosematerialien, umfassend eine neutralisierte wässerige Dispersion von Alaun und eine Kolophonium-Fettsäure-Vinylpolymerzusammensetzung nach irgendeinem der Ansprüche 13 bis 17 oder wie gemäß dem Verfahren nach irgendeinem der Ansprüche 1 bis 12 erhältlich.

20. Feuchtigkeitssperrschichtzusammensetzung für Cellulosematerialien, umfassend eine wässerige Dispersion einer Kolophonium-Fettsäure-Vinylpolymerzusammensetzung nach irgendeinem der Ansprüche 13 bis 17 oder wie gemäß dem Verfahren nach irgendeinem der Ansprüche 1 bis 12 erhältlich.

## Revendications

1. Procédé de production d'une composition colophane-acide gras polymère vinylique qui comprend la mise en réaction lors d'une réaction de polymérisation par addition de :
(a) environ 20,0% à environ 60,0% par rapport au poids total des réactifs d'un mélange colophane-acide gras comprenant :
(1) environ 10,0% à environ 90,0% par rapport au poids total du mélange d'acide gras, et
(2) environ 10,0% à environ 90,0% par rapport au poids total du mélange de colophane, et
(b) environ 40,0% à environ 80,0% par rapport au poids total des réactifs d'un mélange de monomères comprenant :
(1) environ 15,0% à environ 45,0% par rapport au poids total du mélange d'un élément choisi dans le groupe comprenant l'acide acrylique, l'acide méthacrylique, et des combinaisons d'entre eux ;
(2) environ 55,0% à environ 85,0% par rapport au poids total du mélange d'un élément choisi dans le groupe comprenant des monomères vinyliques et leurs combinaisons ;
(3) environ 0,5% à environ 5,0% par rapport au poids total du mélange d'un amorceur de polymérisation ;
(4) jusqu'à environ 4,0% par rapport au poids total du mélange d'un agent de transfert de chaîne ; et
(5) jusqu'à environ 30% par rapport au poids total du mélange d'un solvant hydrocarbure ; afin de produire une composition colophane-acide gras polymère vinylique.

2. Procédé selon la revendication 1 qui comprend de plus la mise en réaction lors d'une réaction de polymérisation par addition de :
(a) environ 20,0% à environ 60,0% par rapport au poids total des réactifs d'un mélange colophane-acide gras comprenant :
(1) environ 20,0% à environ 50,0% par rapport au poids total du mélange d'acide gras, et
(2) environ 50,0% à environ 80,0% par rapport au poids total du mélange de colophane, et
(b) environ 40,0% à environ 80,0% par rapport au poids total des réactifs d'un mélange de monomères comprenant :
(1) environ 20,0% à environ 25,0% par rapport au poids total du mélange d'un élément choisi dans le groupe comprenant l'acide acrylique, l'acide méthacrylique, et leurs combinaisons ;
(2) environ 60,0% à environ 70,0% par rapport au poids total du mélange d'un élément choisi dans le groupe comprenant les monomères vinyliques et leurs combinaisons ;
(3) environ 1,0% à environ 3,0% par rapport au poids total du mélange d'un amorceur de polymérisation ;
(4) environ 0,5% à environ 2,0% par rapport au poids total du mélange d'un agent de transfert de chaîne ; et
(5) environ 1,0% à environ 4,0% par rapport au poids total du mélange d'un solvant hydrocarbure ; afin de produire une composition colophane-acide gras polymère vinylique.

3. Procédé selon la revendication 1 ou 2 dans lequel l'acide gras est un élément choisi dans le groupe consistant en les acides gras contenant de 12 à 24 atomes de carbone et leurs combinaisons.

4. Procédé selon l'une quelconque des revendications 1 à 3 dans lequel la colophane est un élément choisi dans le groupe consistant en la colophane d'huile de pin, la colophane de bois, la colophane de gomme, et leurs combinaisons.

5. Procédé selon l'une quelconque des revendications 1 à 4 dans lequel le monomère vinylique est un élément choisi dans le groupe consistant en les monomères styréniques, les monomères acryliques, les monomères méthacryliques, et leurs combinaisons.

6. Procédé selon l'une quelconque des revendications 1 à 4 dans lequel le monomère vinylique est un mélange contenant au moins un monomère aromatique monoalcénique et au moins un monomère acrylique.

7. Procédé selon la revendication 6 dans lequel le monomère aromatique monoalcénique est un élément choisi parmi le groupe consistant en l'alpha-méthylstyrène, le styrène, le vinyl toluène, le tertio-butyl styrène, l'ortho-chlorostyrène, et leurs combinaisons.

8. Procédé selon l'une quelconque des revendications 1 à 6 dans lequel le monomère acrylique est un élément choisi dans le groupe consistant en le méthacrylate de méthyle, le méthacrylate d'éthyle, le méthacrylate de n-propyle, le méthacrylate de n-butyle, le méthacrylate d'isopropyle, le méthacrylate d'isobutyle, le méthacrylate de n-amyle, le méthacrylate de n-hexyle, le méthacrylate d'isoamyle, le méthacrylate de 2-hydroxyéthyle, le méthacrylate de 2-hydroxypropyle, le méthacrylate de N,N-diméthylaminoéthyle, le méthacrylate de N,N-diéthylaminoéthyle, le méthacrylate de t-butylaminoéthyle, le méthacrylate de 2-sulfoéthyle, le méthacrylate de trifluoroéthyle, le méthacrylate de glycidyle, le méthacrylate de benzyle, le méthacrylate d'allyle, le méthacrylate de 2-n-butoxyéthyle, le méthacrylate de 2-chloroéthyle, le méthacrylate de sec-butyle, le méthacrylate de tert-butyle, le méthacrylate de 2-éthylbutyle, le méthacrylate de cinnamyle, le méthacrylate de crotyle, le méthacrylate de cyclohexyle, le méthacrylate de cyclopentyle, le méthacrylate de 2-éthoxyéthyle, le méthacrylate de furfuryl, le méthacrylate d'hexafluoroisopropyle, le méthacrylate de méthallyle, le méthacrylate de 3-méthoxybutyle, le méthacrylate de 2-méthoxybutyle, le méthacrylate de 2-nitro-2-méthylpropyle, le méthacrylate de n-octyle, le méthacrylate de 2-éthylhexyle, le méthacrylate de 2-phénoxyéthyle, le méthacrylate de 2-phényléthyle, le méthacrylate de phényle, le méthacrylate de propargyle, le méthacrylate de tétrahydrofurfuryle, le méthacrylate de tétrahydropyranyle, l'acide méthacrylique et ses sels, le méthacrylonitrile, le méthacrylamide, le N-méthylméthacrylamide, le N-éthylméthacrylamide, le N,N-diéthylméthacrylamide, le N,N-diméthylméthacrylamide, le N-phénylméthacrylamide, la méthacroléine, l'acrylate de méthyle, l'acrylate d'éthyle, l'acrylate de n-propyle, l'acrylate d'isopropyle, l'acrylate de n-butyle, l'acrylate de n-décyle, l'acide acrylique et ses sels, l'acrylonitrile, l'acrylamide, l'alpha-chloroacrylate de méthyle, le 2-cyanoacrylate de méthyle, le N-éthylacrylamide, le N,N-diéthylacrylamide, l'acroléine, et leurs combinaisons.

9. Procédé selon l'une quelconque des revendications 1 à 8 dans lequel l'amorceur de polymérisation est un élément choisi dans le groupe consistant en le peroxyde de t-butyle, le peroxybenzoate de t-butyle, le peroctoate de t-butyle, l'hydroperoxyde de cumène, l'azobisisobutyronitrile, le peroxyde de benzoyle, le persulfate d'ammonium et leurs combinaisons.

10. Procédé selon l'une quelconque des revendications 1 à 9 dans lequel l'agent de transfert de chaîne est un élément choisi dans le groupe consistant en le dodécylmercaptan, l'acide mercaptoacétique, l'acide mercaptopropionique, l'octylmercaptan, le 2-mercaptoéthanol, et leurs combinaisons.

11. Procédé selon l'une quelconque des revendications 1 à 10 dans lequel le solvant hydrocarbure est un élément choisi dans le groupe consistant en les solvants aromatiques, les solvants aliphatiques, et leurs combinaisons.

12. Procédé selon l'une quelconque des revendications 1 à 11 qui comprend de plus l'utilisation d'un procédé en continu de polymérisation en masse pour la réaction de polymérisation par addition.

13. Composition colophane-acide gras polymère vinylique susceptible d'être obtenue par le procédé selon l'une quelconque des revendications 1 à 12.

14. Composition colophane-acide gras polymère vinylique selon la revendication 13 dans laquelle le polymère a un nombre d'acidité d'environ 175 à environ 500.

15. Composition colophane-acide gras polymère vinylique selon la revendication 13 ou 14 dans laquelle le polymère a un nombre d'acidité d'environ 190 à environ 230.

16. Vernis pour des formulations d'encre pour surimpression comprenant une dispersion de la composition colophane-acide gras polymère vinylique selon l'une quelconque des revendications 13 à 15 ou susceptible d'être obtenu par le procédé selon l'une quelconque des revendications 1 à 12.

17. Vernis pour des formulations pour surimpression comprenant une dispersion aqueuse de la composition colophane-acide gras polymère vinylique selon l'une quelconque des revendications 13 à 16 ou susceptible d'être obtenu par le procédé selon l'une quelconque des revendications 1 à 12.

18. Base de dispersion pour des formulations d'encre comprenant une dispersion aqueuse de la composition colophane-acide gras polymère vinylique selon l'une quelconque des revendications 13 à 17 ou susceptible d'être obtenue par le procédé selon l'une quelconque des revendications 1 à 12.

19. Composition pour traitement superficiel de matériaux cellulosiques comprenant une dispersion aqueuse neutralisée d'alun et de la composition colophane-acide gras polymère vinylique selon l'une quelconque des revendications 13 à 17 ou susceptible d'être obtenue par le procédé selon l'une quelconque des revendications 1 à 12.

20. Composition de revêtement étanche à l'humidité pour des matériaux cellulosiques comprenant une dispersion aqueuse de la composition colophane-acide gras polymère vinylique selon l'une quelconque des revendications 13 à 17 ou susceptible d'être obtenue par le procédé selon l'une quelconque des revendications 1 à 12.
